# EUROPEAN PATENT SPECIFICATION

(11) **EP 1 913 074 B1**
(45) Date of publication and mention of the grant of the patent: **31.12.2008**
(21) Application number: 06777737.5
(22) Date of filing: 12.07.2006
(51) Int. Cl.: C08L 9/06, B60C 1/00, C08K 3/36, C08K 5/01

(54) **HIGH-PERFORMANCE TIRE, TREAD BAND AND CROSSLINKABLE ELASTOMERIC COMPOSITION**
HOCHLEISTUNGSREIFEN, PROFILBAND UND VERNETZBARE ELASTOMERZUSAMMENSETZUNG
BANDE DE ROULEMENT D'UN PNEUMATIQUE HAUTE PERFORMANCE, ET COMPOSITION ELASTOMERE RETICULABLE

(30) Priority: 29.07.2005 EP 05016608
(43) Date of publication of application: 23.04.2008
(73) Proprietor: PIRELLI TYRE S.p.A., 20126 Milano (IT)
(72) Inventor: MEURET, Jochen, 63486 Bruchköbel (DE); KUHLMANN, Udo, 63741 Aschaffenburg (DE)
(74) Representative: Preissner, Nicolaus
(86) International application number: PCT/EP2006/064170
(87) International publication number: WO 2007/014829

(56) References cited:
- EP-A- 0 916 699
- EP-A- 0 940 462
- EP-A- 1 544 238
- WO-A-03/054081
- WOMMELSDORFF R ET AL: "EIN BEITRAG ZUR REDUZIERUNG DER POLYZYKLISCHEN AROMATEN AUS AROMATISCHEN MINERALOELWEICHMACHERN*" KAUTSCHUK UND GUMMI - KUNSTSTOFFE, HUTHIG VERLAG, HEIDELBERG, DE, vol. 45, no. 1, January 1992 (1992-01), pages 24-29, XP000246825 ISSN: 0948-3276
- NULL V: "Safe process oils for tires with low environmental impact" KAUTSCHUK UND GUMMI - KUNSTSTOFFE - ASBEST, DR. ALFRED HUTHIG VERLAG GMBH. HEIDELBERG, DE, vol. 52, no. 12, 1999, pages 799-800,802, XP002184259

## Description

### Background of the invention

The present invention relates to a tire, in particular to a high-performance tire, to a tread band and to a crosslinkable elastomeric composition.

More in particular, the present invention relates to a tire, in particular to a high-performance tire, comprising at least one structural element including a crosslinked elastomeric material obtained by crosslinking a crosslinkable elastomeric composition comprising at least one styrene/1,3-butadiene copolymer, at least one diene elastomeric polymer other than the styrene/1,3-butadiene copolymer, at least one silica reinforcing filler, and at least one oil having a low content of polyaromatic hydrocarbons (PAH).

In a further aspect, the present invention also relates to a tread band includ-ing a crosslinkable elastomeric composition comprising at least one styrene/1,3-butadiene copolymer, at least one diene elastomeric polymer other than the styrene/1,3-butadiene copolymer, at least one silica reinforcing filler and at least one oil having a tow content of polyaromatic hydrocarbons (PAH).

In a still further aspect, the present invention also relates to a crosslinkable elastomeric composition comprising at least one styrene/1,3-butadiene copolymer, at least one diene elastomeric polymer other than the styrene/1,3-butadiene copolymer, at least one silica reinforcing filler and at least one oil having a low content of polyaromatic hydrocarbons (PAH), as well as to a crosslinked manufactured article obtained by crosslinking said crosslinkable elastomeric composition.

With regard to high-performances tires, said tires, which are commonly referred to as "HP" or "UHP" ("High Performance" or "Ultra High Performance") tires, are in particular those belonging to the classes "V" or "Z" which respectively provide for maximum speeds of between 210 Km/h and 240 Km/h and higher than 240Km/h.

### Prior art

It is known to add process oils to both natural and synthetic elastomeric polymers for a number of reasons such as, for example, to reduce the mixing temperatures during processing, to decrease the viscosity of the elastomeric polymers and thereby facilitate milling, extruding and general workability of the crosslinkable elastomeric compositions which may contain other components, to reduce mill and calendering shrinkage, to aid the dispersion of fillers, to modify the physical properties of the crosslinked elastomeric compositions.

Typically, aromatic processing oils having a certain content of polycyclic aromatic (PCA) compounds [also known as polyaromatic hydrocarbons (PAH)], have been used.

In particular, it is known to use distillate aromatic extract oils (DAE-oils) in the manufacturing of tires, more in particular of tire tread bands, to improve tire performances. However, these DAE-oils have the disadvantages of containing a high amount of polyaromatic hydrocarbons (PAH) (approximately 400 ppm) which are ecologically harmful and under suspicion of causing cancer. Wear particles produced during car driving are an important factor for the pollution of the environment by DAE-oils.

Therefore several environmental agencies are demanding to eliminate DAE-oils from the market. For example, the European legislation classifies DAE-oils as "cancerogenic" and allocates the risk phrase "R45" (may cause cancer) to DAE-oils.

The European tire manufactures organization BLIC (Bureau the Liasons des Industries du Caoutchouc de l'U.E., Brussels) together with IISRP (European Section of the International Institute of Synthetic Rubber Producers, London) initiated a joint research program to look for alternatives. As a matter of fact they invited the oil companies to propose suitable candidates as DAE-oils alternatives.

In particular, mineral oils containing a dimethyl sulphoxide (DMSO) extract (determined by IP 346 test method) in an amount ≤ 3 wt% are considered not carcinogenic and are suggested as DAE-oils alternatives. As representative of such special mineral oils may be mentioned, for example, mild extraction solvate oils (MES-oils) and treated distillate aromatic extract oils (T-DAE oils).

For example, J.E. Pocklington ("A safer alternative to aromatic process oils"; Tire Technology International 1998) suggests to replace the DAE-oils by different oils among which residual aromatic extract oils (RAE-oils) and MES-oils are cited. However, in that article, the use of RAE-oils is not recommended because of their limited availability.

However, the use of both MES-oils and TDAE-oils present some disadvantages as their chemical composition strongly differs from DAE-oils. To illustrate the different chemical compositions the typical carboris-distribution (S-uncorrected) of MES-oils, TDAE-oils and DAE-oils are compared in the following table. The aromatic carbons (CA) content, the naphthene ring carbons (CN) content and the paraffin chain carbons (CP) content, was determined according to standard ASTM D2140-03 (Kurtz analysis) (the content is expressed in % by weight with respect to the total weight of the hydrocarbons contained in the oils).

**TABLE 1: Typical carbons-distribution of MES-oils. TDAE-oils and DAE-oils**

| | CA | CN | CP |
|---|---|---|---|
| MES-oils | 11 %-17% | 25%-32% | 54%-68% |
| TDAE-oils | 25%-30% | 25%-30% | 42%-50% |
| DAE-oils | 35%-45% | 20%-30% | 30%-40% |

Mainly the lower content of aromatic carbons (CA) in both MES-oils and TDAE-oils cause disadvantages in tires properties, in particular as regards their wet-skid behaviour, compared to DAE-oils. Therefore, these oils appear to be no particularly suitable for use in producing tire structural elements, more in particular, a tire tread band.

Other efforts have been made in the prior art to find alternative to DAE-oils.

For example, United States Patent US 5,504,113 discloses an oil composition which has a kinematic viscosity at 100°C of from 32 cSt to 50 cSt and a DMSO extract of less than 3 wt% according to standard test IP 346. In particular, said oil may contain from 30 wt% to 55 wt%, e.g. in the range of from 30 wt% to 50 wt% (such as in the range of from 35 wt% to 48 wt%) total aromatic compounds based on the total weight of hydrocarbons contained in the oil. Of this, the DMSO extract present is less than 3 wt%, e.g. in the range of from 1 wt% to 3 wt%, such as in the range of from 1 wt% to 2 wt%, based on the total weight of hydrocarbons contained in the oil composition and determined according to standard test IP 346. The addition of said oils to rubber compositions is said to give the rubber compositions properties which result to be only slightly inferior with respect to the oils known in the prior art.

United States Patent Application 2002/0198296 discloses a rubber mixtures containing a terpolymer (NSBR) based on unsaturated olefinic nitrile, a vinyl aromatic compound and a conjugated diene, a non-polar rubber and a special mineral oil containing a DMSO extract in an amount ≤ 3 wt% as determined according to standard test IP 346. Preferably, the special mineral oils used are MES-oils (Catenex SNR^{®} is specifically disclosed) and TDAE-oils, as well as mineral oils such as naphthenic oils or hydrogenated naphthenic oils. The abovementioned rubber mixtures are said to have comparable or better technical qualities than rubber mixtures to which conventional aromatic mineral oils are added. In particular; the rubber mixtures are said to to have an improved wet-skid resistance.

United States Patent Application US 2005/0009978 discloses a pneumatic tire having a component comprising a vulcanizable rubber composition comprising, based on 100 parts by weight of elastomer (phr), from about 40 phr to about 90 phr of a solution polymerized styrene-butadiene having a styrene content of greater than 38 wt%; from about 10 phr to about 60 phr of at least one additional elastomer; and from about 10 phr to about 70 phr of a process oil having a glass transition temperature of from about -80°C to about -40°C and a DMSO extract of less than 3% by weight as determined according to standard test IP 346. Said special mineral oils may be selected from MES-oils (Catenex SNR^{®} is specifically disclosed), TDAE-oils and heavy naphthenic type oils. The abovementioned pneumatic tire is said to have an excellent balance of rolling resistance and wet grip properties.

### Summary of the invention

The Applicant has faced the problem of providing a tire, in particular a high-performance tire, having high wet and dry grip.

The Applicant has observed that the substitution of the aromatic oils (such as DAE-oils) by MES-oils or TDAE oils in the crosslinkable elastomeric compositions may show some drawbacks. In particular, the Applicant has observed that the use of said MES-oil or TDAE oils instead of DAE-oil does not allow to obtain a tire having high wet and dry grip.

The Applicant has now found that it is possible to obtain tires, in particular high-performance tires, showing high wet and dry grip by adding to the crosslinkable elastomeric compositions a RAE-oil. Said high wet and dry grip is obtained without negatively affecting the tires rolling resistance. Moreover, said high wet and dry grip is obtained without negatively affecting the static mechanical properties of the crosslinked elastomeric compositions. A still further advantageous aspect is the fact that said oil, having a low polyaromatic hydrocarbons (PAH) content (i.e. not higher than or equal to 10 ppm as determined by gas chromatography analysis presents a low toxicity and is not carcinogenic).

According to a first aspect, the present invention relates to a tire comprising at least one structural element including a crosslinked elastomeric material obtained by crosslinking a crosslinkable elastomeric compositon comprising:
(a) from 40 phr to 100 phr of at least one styrene/1,3-butadiene copolymer;
(b) from 0 phr to 60 phr of at least one diene elastomeric polymer other than the styrene/1,3-butadiene copolymer;
(c) from 60 phr to 100 phr of at least one silica reinforcing filler;
(d) from 20 phr to 60 phr of at least one RAE-oil.

According to one preferred embodiment, the tire comprises:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is a tread band.

For the purposes of the present invention and of the claims which follow, the term "phr" means the parts by weight of a given component of the crosslinkable elastomeric composition per 100 parts by weight of the elastomeric polymer(s).

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the claims which follow the expression "RAE-oil" (residual aromatic extract oils) is referred to an oil obtained by a solvent extraction of a vacuum distillation residuum from crude oil subjected to a deasphalting treatment. A further explanation about the production process of a RAE-oil will follow.

According to a further aspect, the present invention also relates to a tread band including a crosslinkable elastomeric composition comprising:
(a) from 40 phr to 100 phr of at least one styrene/1,3-butadiene copolymer;
(b) from 0 phr to 60 phr of at least one diene elastomeric polymer other than the styrene/1,3-butadiene copolymer;
(c) from 60 phr to 100 phr of at least one silica reinforcing filler;
(d) from 20 phr to 60 phr of at least one RAE-oil.

According to a still further aspect, the present invention also relates to a crosslinkable elastomeric composition comprising:
(a) from 40 phr to 100 phr of at least one styrene/1,3-butadiene copolymer;
(b) from 0 phr to 60 phr of at least one diene elastomeric polymer other than the styrene/1,3-butadiene copolymer;
(c) from 60 phr to 100 phr of at least one silica reinforcing filler;
(d) from 20 phr to 60 phr of at least one RAE-oil.

According to one preferred embodiment, said crosslinkable elastomeric composition may further comprise (e) at least one silane coupling agent.

According to a further preferred embodiment, said crosslinkable elastomeric composition may further comprise at least one resin (f).

According to a still further aspect, the present invention also relates to a crosslinked manufactured article obtained by crosslinking said crosslinkable elastomeric composition.

According to one preferred embodiment, said crosslinkable elastomeric composition comprises from 50 phr to 90 phr of said at least one styrene/1,3-butadiene copolymer (a). More preferably, it comprises from 60 phr to 80 phr of said at least one styrene/1,3-butadiene copolymer (a).

According to a further preferred embodiment, said at least one styrene/1,3-butadiene copolymer (a) has a styrene content of from 10% to 50%. More preferably, said at least one styrene/1,3-butadiene copolymer (a) has a styrene content of from 20% to 40%. Still more preferably, said at least one styrene/1,3-butadiene copolymer (a) has a styrene content of from 25% to 35%.

According to a further preferred embodiment, said crosslinkable elastomeric composition comprises from 10 phr to 50 phr of said at least one diene elastomeric polymer other than the styrene/1,3-butadiene copolymer (b). More preferably, it comprises from 20 phr to 40 phr of said at least one diene elastomeric polymer other than the styrene/1,3-butadiene copolymer (b).

According to one preferred embodiment, said at least one diene elastomeric polymer other than the styrene/1,3-butadiene copolymer (b) may be selected from those commonly used in sulfur-crosslinkable elastomeric materials, that are particularly suitable for producing tires, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said at least one diene elastomeric polymer other than the styrene/1,3-butadiene copolymer (b) may be selected, for example, from: cis-1,4-polyisoprene (natural or synthetic, preferably natural rubber), 3,4-polyisoprene, polybutadiene (in particular polybutadiene with a high 1,4-cis content and a low vinyl content), optionally halogenated isoprene/isobutene copolymers, 1,3-butadiene/acrylonitrile copolymers, styrene/isoprene/1,3-butadiene copolymers, styrene/1,3-butadiene/acrylonitrile copolymers, or mixtures thereof. Polybutadiene, in particular, polybutadiene with a high 1,4-cis content and a low vinyl content, is particularly preferred. More preferably, said polybutadiene has a 1,4-cis content of more than 90% and a vinyl content of less than 5%.

The above reported crosslinkable elastomeric composition may optionally comprise at least one diene elastomeric polymer functionalized by reaction with suitable terminating agents or coupling agents. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124 and US 4,550,142).

According to one preferred embodiment, said crosslinkable elastomeric composition comprises from 70 phr to 90 phr of said at least one silica reinforcing filler (c). More preferably, it comprises from 75 phr to 85 phr of said at least one silica reinforcing filler.

According to a further preferred embodiment, said at least one silica reinforcing filler (c) may be selected from precipitated amorphous silica, wet silica (hydrated silicic acid), dry silica (anhydrous silicic acid), fumed silica, or mixtures thereof. Precipitated amorphous silica, hydrated silica, are preferred, in particular those having a BET surface area (measured according to ISO standard 5794/1) of from 50 m²/g to 500 m²/g, preferably of from 70 m²/g to 200 m²/g_{.}

According to one preferred embodiment, said crosslinkable elastomeric composition comprises from 20 phr to 60 phr of said at least one RAE-oil (d). More preferably, it comprises from 25 phr to 50 phr, even more preferably from 30 phr to 40 phr, of said at least one RAE-oil (d).

According to one preferred embodiment, said at least one RAE-oil (d) has the following carbons-distribution:
- an aromatic carbons (CA) content of from 25% to 50%, preferably of from 32% to 40%;
- a naphthene ring carbons (CN) content of from 20% to 40%, preferably of from 25% to 33%;
- a paraffin chain carbons (CP) content of from 20% to 50%, preferably of from 30% to 40%;
- a polyaromatic hydrocarbons (PAH) content not higher than or equal to 10 ppm, preferably not higher than or equal to 6 ppm.

According to an even more preferred embodiment, said at least one RAE-oil (d) has the following carbons-distribution:
- an aromatic carbons (CA) content of from 35% to 38%, preferably of 36%;
- a naphthene ring carbons (CN) content of from 27% to 30%, preferably of 29%;
- a paraffin chain carbons (CP) content of from 33% to 38%, preferably of 35%;
- a polyaromatic hydrocarbons (PAH) content not higher than or equal to 10 ppm, preferably not higher than or equal to 6 ppm.

The aromatic carbons (CA) content, the naphthene ring carbons (CN) content and the paraffin chain carbons (CP) content, was determined according to standard ASTM D2140-03 (Kurtz analysis) (the content is expressed in % by weight with respect to the total weight of the hydrocarbons contained in the oils).

The PAH-content was measured by a gas chromatography analysis.

Said at least one RAE-oil (d) may be produced by processes which are well known in the art. For example, said at least one RAE-oil (d) may be produced by a process comprising the following steps:
(i) subjecting the crude oil to a vacuum distillation to obtain a vacuum distillation residuum;
(ii) subjecting said vacuum distillation residuum to a deasphalting treatment to obtain a desphalted crude oil residuum and an asphaltic residuum;
(iii) separating the deasphalting residuum and the asphaltic residuum;
(iv) subjecting the deasphalted residuum to a solvent extraction;
(v) removing the solvent to obtain the RAE-oil.

Specific examples of deasphalting agents which may be advantageously used in step (ii) are: propane, n-butane, iso-butane, pentane, or mixtures thereof.

Specific example of solvent which may be advantageously used in step (iv) are: furfural, N-methyl-2-pyrrolidone, phenol, or mixtures therof, optionally admixed with water.

Examples of RAE-oils (d) which may be used in the present invention and which are currently commercially available are the products Dealen^{®} D52 KF and Shell Flavex^{®} 595 from Shell.

As disclosed above, said crosslinkable elastomeric composition may further comprise (e) at least one silane coupling agent capable of interacting with the silica and of linking it to the elastomeric polymer during the vulcanization.

Coupling agents that are preferably used are those based on silane which may be identified, for example, by the following structural formula (I):

(R)₃Si-CₜH₂ₜ-X (I)

wherein the groups R, which may be equal or different from each other, are selected from: alkyl, alkoxy or aryloxy groups or from halogen atoms, on condition that at least one of the groups R is an alkoxy or aryloxy group; t is an integer of from 1 to 6 extremes included; X is a group selected from: nitroso, mercapto, amino, epoxide, vinyl, imide, chloro, - (S)ᵤCₜH₂ₜ-Si-(R)₃ or or -S-COR in which u and t are integers of from 1 to 6 extremes included and the groups R are defined as reported above.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example, carbon black) so as to facilitate their incorporation into the crosslinkable elastomeric composition.

According to one preferred embodiment, said at least one silane coupling agent (e) is present in the crosslinkable elastomeric composition in an amount of from 0 phr to 10 phr, preferably of from 4 phr to 8 phr.

As disclosed above, said crosslinkable elastomeric composition may further comprise (f) at least one resin. Preferably, said at least one resin (f) may be selected, for example, from α-methyl-styrene resins, phenolic resins. cumarone indene resins, or mixture thereof.

According to one preferred embodiment, said at least one resin (f) is present in the crosslinkable elastomeric composition in an amount of from 0 phr to 15 phr, preferably of from 7 phr to 12 phr.

At least one additional reinforcing filler may advantageously be added to the above reported crosslinkable elastomeric composition, in an amount generally of from 0 phr to 120 phr, preferably of from 20 phr to 90 phr. Said at least one additional reinforcing filler may be selected from those commonly used for crosslinked manufactured articles, in particular for tires, such as, for example, carbon black, alumina, calcium carbonate, kaolin, or mixtures thereof. Carbon black is particularly preferred.

The types of carbon black which may be used according to the present invention may be selected from those conventionally used in the production of tires, generally having a surface area of not less than 20 m²/g (determined by CTAB absorption as described in ISO standard 6810).

The crosslinkable elastomeric composition above reported may be vulcanized according to known techniques, in particular with sulfur-based vulcanizing systems commonly used for elastomeric polymers. To this end, in the composition, after one or more steps of thermomechanical processing, a sulfur-based vulcanizing agent is incorporated together with vulcanization accelerators. In the final processing step, the temperature is generally kept below 120°C and preferably below 100°C, so as to avoid any unwanted precrosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the crosslinkable elastomeric composition is intended. For example, the following may be added to said crosslinkable elastomeric composition: antioxidants, anti-ageing agents, plasticizers, adhesives, antiozonants (in particular of the p-phenylenediamine type), waxes, fibres (for example Kevlar^{®} pulp), or mixtures thereof.

The above reported crosslinkable elastomeric composition may be prepared by mixing together the elastomeric base components, the silica reinforcing filler and the oil, with the other reinforcing fillers and the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of corotating or counter-rotating twin-screw type.

### Brief description of the drawing

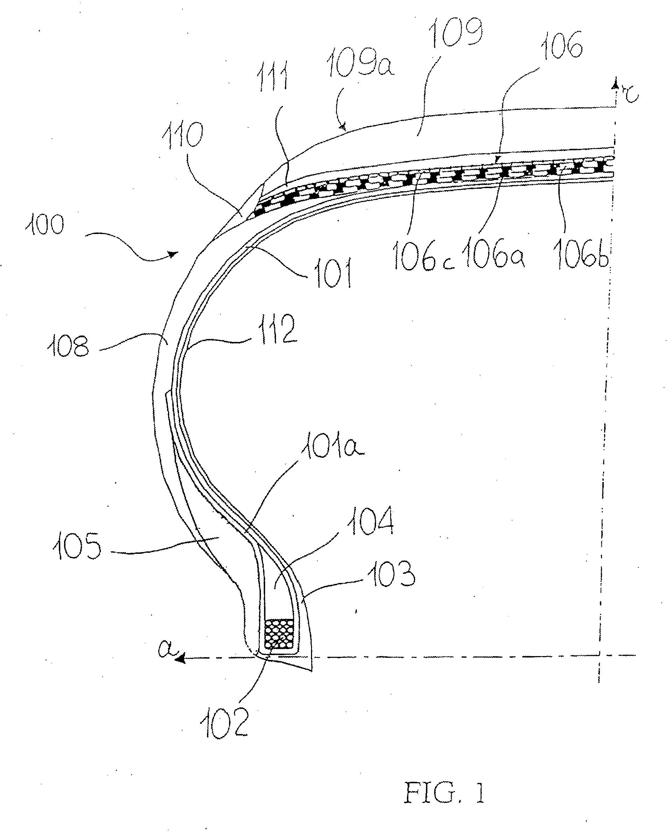

The present invention will now be illustrated in further detail by means of a number of illustrative embodiments, with reference to the attached Fig. 1 which are a view in cross section of a portion of a tire made according to the invention.

"a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101 a) as shown in Fig. 1.

Alternatively, the conventional bead core (102) may be replaced with at least one annular insert formed from rubberized wires arranged in concentric coils (not represented in Fig. 1) (see, for example, European Patent Application EP 928,680 or EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of a crosslinked elastomeric material. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) wherein the bead core (102) is embedded. An antiabrasive strip (105) is usually placed in an axially external position relative to the carcass back-fold (101 a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of a crosslinked elastomeric material.

A side wall (108) is also applied externally onto the carcass ply (101), this side wall extending, in an axially external position, from the bead (103) to the end of the belt structure (106).

A tread band (109), which may be made according to the present invention, whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) is placed between the belt structure (106) and the tread band (109).

As represented in Fig. 1, the tread underlayer (111) may have uniform thickness. Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of a crosslinked elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

The process for producing the tire according to the present invention may be carried out according to techniques and using apparatus that are known in the art, as described, for example, in European Patents EP 199,064, or in United States Patent US 4,872,822 or US 4,768,937, said process including at least one stage of manufacturing the crude tire and at least one stage of vulcanizing this tire.

More particularly, the process for producing the tire comprises the steps of preparing, beforehand and separately from each other, a series of semi-finished products corresponding to the various structural elements of the tire (carcass plies, belt structure, bead wires, fillers, sidewalls and tread band) which are then combined together using a suitable manufacturing machine. Next, the subsequent vulcanization step welds the abovementioned semi-finished products together to give a monolithic block, i.e. the finished tire.

The step of preparing the abovementioned semi-finished products will be preceded by a step of preparing and moulding the various crosslinkable elastomeric compositions, of which said semi-finished products are made, according to conventional techniques.

The crude tire thus obtained is then passed to the subsequent steps of moulding and vulcanization. To this end, a vulcanization mould is used which is designed to receive the tire being processed inside a moulding cavity having walls which are countermoulded to define the outer surface of the tire when the vulcanization is complete.

Alternative processes for producing a tire or parts of a tire without using semi-finished products are disclosed, for example, in the abovementioned European Patent Application EP 928,680 or EP 928,702.

According to one preferred embodiment, said structural elements are formed by a plurality of coils of a continuous elongated element. Said elongated element may be produced, for example, by extruding the crosslinkable elastomeric composition above disclosed. Preferably, said structural elements are assembled onto a support.

For the purposes of the present description and of the claims which follow, the term "support" is used to indicate the following devices:
- an auxiliary drum having a cilindrical shape, said auxiliary drum preferably supporting a belt structure;
- a shaping drum having a substantially toroidal configuration, said shaping drum preferably supporting at least one carcass structure with a belt structure assembled thereon;
- a rigid support preferably shaped according to the inner configuration of the tire.

Further details regarding said devices and the methods of forming and/or depositing the structural elements of the tire on a support are described, for example, in International Patent Application WO 01/36185 or in European Patent EP 976,536 in the name of the Applicant, or in European Patent Application: EP 968,814, EP 1,201,414, or EP 1,211,057.

The crude tire can be moulded by introducing a pressurized fluid into the space defined by the inner surface of the tire, so as to press the outer surface of the crude tire against the walls of the moulding cavity. In one of the moulding methods widely practised, a vulcanization chamber made of elastomeric material, filled with steam and/or another fluid under pressure, is inflated inside the tire closed inside the moulding cavity. In this way, the crude tire is pushed against the inner walls of the moulding cavity, thus obtaining the desired moulding. Alternatively, the moulding may be carried out without an inflatable vulcanization chamber, by providing inside the tire a toroidal metal support shaped according to the configuration of the inner surface of the tire to be obtained as described, for example, in Europen Patent EP 1,189,744.

At this point, the step of vulcanizing the crude tire is carried out. To this end, the outer wall of the vulcanization mould is placed in contact with a heating fluid (generally steam) such that the outer wall reaches a maximum temperature generally of from 100°C to 230°C. Simultaneously, the inner surface of the tire is heated to the vulcanization temperature using the same pressurized fluid used to press the tire against the walls of the moulding cavity, heated to a maximum temperature of from 100°C to 250°C. The time required to obtain a satisfactory degree of vulcanization throughout the mass of the elastomeric material may vary in general of from 3 min to 90 min and depends mainly on the dimensions of the tire. When the vulcanization is complete, the tire is removed from the vulcanization mould.

The present invention will be further illustrated below by means of a number of preparation examples, which are given for purely indicative purposes and without any limitation of this invention.

### EXAMPLES 1-5

### Preparation of the crosslinkable elastomeric compositions

The elastomeric compositions given in Table 2 were prepared as follows (the amounts of the various components are given in phr).

All the components, except sulfur and accelerators (DPG 80, CBS), were mixed together in an internal mixer (model Pomini PL 1.6) for about 5 min (1^{st} Step). As soon as the temperature reached 145±5°C, the elastomeric composition was discharged. The sulfur and accelerators (DPG 80, CBS), were then added and the mixing was carried out in an open roll mixer (2^{nd} Step).

**TABLE 2**

| EXAMPLE | 1 (*) | 2 (*) | 3 (*) | 4 | 5 |
|---|---|---|---|---|---|
| 1^{st} STEP | | | | | |
| Buna^{®} VSL 5525-0 | 75.00 | 75.00 | 75.00 | 75.00 | 75.00 |
| Buna^{®} CB 25 | 25.00 | 25.00 | 25.00 | 25.00 | 25.00 |
| Stearic acid | 2.50 | 2.50 | 2.50 | 2.50 | 2.50 |
| Silica | 80.00 | 80.00 | 80.00 | 80.00 | 80.00 |
| Si 69^{®} | 6.40 | 6.40 | 6.40 | 6.40 | 6.40 |
| N 134 | 12.50 | 12.50 | 12.50 | 12.50 | 12.50 |
| dealen D6 | 37.50 | - | - | - | - |
| Vivatec^{®} 500 | - | 37.50 | - | - | - |
| Catenex^{®} SNR | - | - | 32.00 | - | - |
| Dealen^{®} D 52 KF | - | - | - | 37.50 | - |
| Shell Flavex^{®} 595 | - | - | - | - | 37.50 |
| Zinc Oxide | 2.50 | 2.50 | 2.50 | 2.50 | 2.50 |
| 6PPD | 1.75 | 1.75 | 1.75 | 1.75 | 1.75 |
| TMQ | 1.25 | 1.25 | 1.25 | 1.25 | 1.25 |
| DTPD | 0.75 | 0.75 | 0.75 | 0.75 | 0.75 |
| LSW | 1.25 | 1.25 | 1.25 | 1.25 | 1.25 |

| 2^{nd} STEP | | | | | |
|---|---|---|---|---|---|
| DPG 80 | 2.00 | 2.00 | 2.00 | 2.00 | 2.00 |
| CBS | 2.00 | 2.00 | 2.00 | 2.00 | 2.00 |
| Sulfur | 1.25 | 1.25 | 1.25 | 1.25 | 1.25 |

| | | | | | |
|---|---|---|---|---|---|
| (*): comparative. | | | | | |

The compounds were brought to the same hardnesses by using different amounts of free oils. Different amounts of free oils were choosen because physical data of tread compounds may only be compared if said tread compounds exhibit equal hardness.
- Buna^{®} VSL 5525-0:: styrene/1,3-butadiene copolymer, obtained by solution polymerization, containing 25% by weight of styrene and 50% by weight of 1,3-butadiene (Bayer);
- Buna^{®} CB 25:: high cis-1,4-polybutadiene having a minimum content of 1,4 cis structure of 96% by weight (Lanxess);
- Silica:: precipitated silica (Zeosil^{®} 1165 MP - Rhone-Poulenc);
- Si 69^{®} (silane coupling agent) :: bis(3-triethoxysilylpropyl) tetrasulphide (Degussa-Hüls);
- N 134:: carbon black (Columbian Chemical);
- Dealen D6:: DAE-oil having the following carbons-distribution: CA = 40% by weight, CN = 25% by weihght, CP = 35% by weight and a PAH content of about 400 ppm (Shell);
- Vivatec^{®} 500:: TDAE-oil having the following carbons-distribution: CA = 25% by weight, CN = 30% by weight, CP = 45% by weight and a PAH content lower than 10 ppm (BP);
- Catenex^{®} SNR:: MES-oil having the following carbons-distribution: CA = 14% by weight, CN = 29% by weight, CP = 57% by weight and a PAH content lower than 10 ppm (Shell);
- Dealen^{®} D 52 KF:: RAE-oil having the following carbons-distribution: CA = 37% by weight, CN = 29% by weight, CP = 34% by weight and a PAH content of 10 ppm (Shell); Specific Gravity at 15°C = 990 kg/m³; Kinematic Viscosity at 100°C = 67 mm²/s; Refractive Index = 1,56; Pour Point = +6°C; Aniline Point = 59°C;
- Shell Flavex^{®} 595:: RAE-oil having the following carbons-distribution: CA = 36% by weight, CN = 29% by weight, CP = 35% by weight and a PAH content of 5 ppm; Specific Gravity at 15°C = 980 kg/m³; Kinematic Viscosity at 100°C = 60 mm²/s; Refractive Index = 1,55; Pour Point = +30°C; Aniline Point = 66°C;
- 6-PPD:: N-(1,3-dimethylbutyl)-N'-phenyl-p-phenylene-diamine;
- TMQ:: polymerized 2,2,4-trimethyl-1,2-dihydroquinoline (Vulcanox^{®} 4020 - Bayer);
- DTPD:: N,N-ditolyl-p-phenyl-diamine;
- LSW:: Antiozonant Wax (Okerin 2124 H - Astor Honeywell);
- DPG (accelerator):: diphenylguanidine (Vulkacit^{®} D - Bayer);
- CBS (accelerator):: N-cyclohexyl-2-benzothiazyl sulphenamide (Vulkacit^{®} CZ - Bayer).

The Mooney viscosity ML(1+4) at 100°C was measured, according to ISO standard 289-1:1994, on the non-crosslinked elastomeric compositions obtained as described above. The results obtained are given in Table 3.

Said elastomeric compositions were also submitted to a MDR rheometric analysis using a MDR rheometer from Monsanto, the tests being run at 170°C for 24 minutes, with an oscillation frequency of 1.66 Hz (100 oscillations per minute) and an oscillation amplitude of ± 0.5°. The results obtained are given in Table 3.

The static mechanical properties according to Standard ISO 37:1994 as well as hardness in IRHD degrees (at 23°C) according to ISO standard 48:1994, were measured on samples of the abovementioned elastomeric compositions vulcanized at 170°C for 10 min. The results obtained are given in Table 3.

Table 3 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 12 mm), compression-preloaded up to a 25% longitudinal deformation with respect to the initial length, and kept at the prefixed temperature (-10°C, 0°C, 23°C, or 70°C) for the whole duration of the test, was submitted to a dynamic sinusoidal strain having an amplitude of ±3.5% with respect to the length under pre-load, with a 10 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Table 3 also show the DIN abrasion: the data (expressed in mm³) correspond to the amount of elastomeric composition removed by operating under the standard conditions given in DIN standard 53516.

**TABLE 3**

| EXAMPLE | 1 (*) | 2(*) | 3 (*) | 4 | 5 |
|---|---|---|---|---|---|
| Mooney viscosity (ML (1+4) | 45.3 | 47.1 | 51.4 | 48.7 | 48.6 |

| MDR RHEOMETRIC ANALYSIS | | | | | |
|---|---|---|---|---|---|
| T10 | 1.1 | 1.1 | 1.0 | 1.1 | 1.1 |
| T30 | 1.9 | 2.0 | 1.8 | 2.0 | 1.9 |
| T60 | 2.7 | 2.9 | 2.7 | 2.9 | 2.8 |
| T90 | 7.1 | 7.9 | 8.7 | 8.3 | 7.1 |
| Min torque (dN.m) | 2.1 | 2.2 | 2.4 | 2.1 | 2.0 |
| Max torque (dN.m) | 20.3. | 20.6 | 21.8 | 20.1 | 20.3 |

| STATIC MECHANICAL PROPERTIES | | | | | |
|---|---|---|---|---|---|
| 50% Modulus (MPa) | 1.57 | 1.60 | 1.72 | 1.58 | 1.65 |
| 100% Modulus (MPa) | 2.4 | 2.4 | 2.7 | 2.4 | 2.6 |
| 300% Modulus (MPa) | 9.0 | 9.3 | 10.6 | 9.3 | 9.9 |
| Stress at break Mpa) | 15.1 | 14.9 | 14.5 | 15.3 | 15.1 |
| Elongation at break (%) | 486 | 475 | 415 | 480 | 459 |

| DYNAMIC MECHANICAL PROPERTIES | | | | | |
|---|---|---|---|---|---|
| E' (-10°C) (MPa) | 17.1 | 16.3 | 16.3 | 18.2 | 18.1 |
| E' (0°C) (MPa) | 13.5 | 13.2 | 13.8 | 13.1 | 14.0 |
| E' (23°C) (MPa) | 9.4 | 9.1 | 9.8 | 9.1 | 9.6 |
| E' (70°C) (MPa) | 6.5 | 6.2 | 6.9 | 6.3 | 6.7 |
| Tan delta (-10°C) (MPa) | 0.623 | 0.608 | 0.525 | 0.682 | 0.677 |
| Tan delta (0°C) (MPa) | 0.503 | 0.477 | 0.431 | 0.529 | 0.518 |
| Tan delta (23°C) (MPa) | 0.331 | 0.317 | 0.302 | 0.342 | 0.342 |
| Tan delta (70°C) (MPa) | 0.192 | 0.187 | 0.178 | 0.187 | 0.185 |
| IRHD HARDNESS (23°C) | 79 | 79 | 79 | 78 | 78 |
| DIN ABRASION (mm³) | 74 | 78 | 73 | 76 | 72 |

| | | | | | |
|---|---|---|---|---|---|
| (*): comparative. | | | | | |

The data above reported clearly show that remarkable differences between the different oils occur in the dynamic physical data of the elastomeric compositions so obtained. As a matter of fact, while the MES-oil (Example 3) and the TDAE-oil (Example 2) exhibit much lower Tan delta values at -10°C and 0°C, the RAE-oils (Examples 4-5) show higher values even than the DAE-oil (Example 1). Because a higher Tan delta value at -10°C and 0°C predicts a higher wet grip performance it can be expected that the RAE-oils lead to an improved wet behavior of the tire compared even to a tire produced using a DAE-oil. Also at 23°C the tandelta values of RAE-oils, which predict dry grip, are higher than the value of the DAE-oil and much higher than the values of the MES-oil and the TDAE-oil. It follows that the use of RAE-oils allows to obtain tires having higher wet and dry grip than tires produced using usual aromatic oils.

The Tan delta values at 70°C, which predict rolling resistance, are not higher for the RAE-oils (Examples 4-5) compared to the usual aromatic oils (Examples 1-3). Since a higher Tan delta value at 70°C is correlated with a higher rolling resistance, one can deduce that using a RAE-oil does not negatively influence the rolling resistance of the tire.

Also the E' values are not changed by the substitution of usual aromatic oils (Examples 1-3) by RAE-oils (Examples 4-5). Further, rheometric properties, static mechanical properties and DIN abrasion of all elastomeric compositions are similar: consequently, the use of RAE-oils do not negatively affect said properties.

## Claims

1. A tire comprising at least one structural element including a crosslinked elastomeric material obtained by crosslinking a crosslinkable elastomeric compositon comprising:
(a) from 40 phr to 100 phr of at least one styrene/1,3-butadiene copolymer;
(b) from 0 phr to 60 phr of at least one diene elastomeric polymer other than the styrene/1,3-butadiene copolymer;
(c) from 60 phr to 100 phr of at least one silica reinforcing filler;
(d) from 20 phr to 60 phr of at least one RAE-oil.

2. A tire according to claim 1, comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is a tread band.

3. A tire according to claim 1 or 2, wherein said crosslinkable elastomeric composition comprises from 50 phr to 90 phr of at least one styrene/1,3-butadiene copolymer (a).

4. A tire according to claim 3, wherein said crosslinkable elastomeric composition comprises from 60 phr to 80 phr of said at least one styrene/1,3-butadiene copolymer (a).

5. A tire according to any one of the preceding claims, wherein said at least one styrene/1,3-butadiene copolymer (a) has a styrene content of from 10% to 50%.

6. A tire according to claim 5, wherein said at least one styrene/1,3-butadiene copolymer (a) has a styrene content of from 20% to 40%.

7. A tire according to Claim 6, wherein said at least one styrene/1,3-butadiene copolymer (a) has a styrene content of from 25% to 35%.

8. A tire according to any one of the preceding claims, wherein said crosslinkable elastomeric composition comprises from 10 phr to 50 phr of at least one diene elastomeric polymer other than the styrene/1,3-butadiene copolymer (b).

9. A tire according to claim 8, wherein said crosslinkable elastomeric composition comprises from 20 phr to 40 phr of said at least one diene elastomeric polymer other than the styrene/1,3-butadiene copolymer (b).

10. A tire according to any one of the preceding claims, wherein said at least one diene elastomeric polymer other than the styrene/1,3-butadiene copolymer (b) has a glass transition temperature (T_{g}) below 20°C.

11. A tire according to claim 10, wherein said at least one diene elastomeric polymer other than the styrene/1,3-butadiene copolymer (b) is selected from: cis-1,4-polyisoprene (natural or synthetic), 3,4-polyisoprene, polybutadiene (in particular polybutadiene with a high 1,4-cis content and a low vinyl content), optionally halogenated isoprene/isobutene copolymers, 1,3-butadiene/acrylonitrile copolymers, styrene/isoprene/1,3-butadiene copolymers, styrene/1,3-butadiene/acrylonitrile copolymers, or mixtures thereof.

12. A tire according to claim 11, wherein said at least one diene elastomeric polymer other than the styrene/1,3-butadiene copolymer (b) is polybutadiene.

13. A tire according to claim 12, wherein said polybutadiene has a 1,4-cis content of more than 90% and a vinyl content of less than 5%.

14. A tire according to any one of the preceding claims, wherein said crosslinkable elastomeric composition comprises from 70 phr to 90 phr of at least one silica reinforcing filler (c).

15. A tire according to claim 14, wherein said crosslinkable elastomeric composition comprises from 75 phr to 85 phr of said at least one silica reinforcing filler (c).

16. A tire according to any one of the preceding claims, wherein said at least one silica reinforcing filler (c) is selected from precipitated amorphous silica, wet silica (hydrated silicic acid), dry silica (anhydrous silicic acid), fumed silica, or mixtures thereof.

17. A tire according to any one of the preceding claims, wherein said crosslinkable elastomeric composition comprises from 20 phr to 60 phr of at least one RAE-oil (d).

18. A. tire according to claim 17, wherein said crosslinkable ealstomeric composition comprises from 25 phr to 50 phr of said at least one RAE-oil (d).

19. A tire according to claim 18, wherein said crosslinkable ealstomeric composition comprises from 30 phr to 40 phr of said at least one RAE-oil (d).

20. A tire according to any one of the preceding claims, wherein said at least one RAE-oil (d) has the following carbons-distribution:
- an aromatic carbons (CA) content of from 25% to 50%;
- a naphthene ring carbons (CN) content of from 20% to 40%;
- a paraffin chain carbons (CP) content of from 20% to 50%;
- a polyaromatic hydrocarbons (PAH) content not higher than or equal to 10 ppm.

21. A tire according to claim 20, wherein said at least one RAE-oil (d) has an aromatic carbons (CA) content of from 32% to 40%.

22. A tire according to any one of claim 20 or 21, wherein said at least one RAE-oil (d) has a naphthene ring carbons (CN) content of from 25% to 33%.

23. A tire according to any one of claims 20 to 22, wherein said at least one RAE-oil (d) has a paraffin chain carbons (CP) content of from 30% to 40%.

24. A tire according to any one of claims 20 to 23, wherein said at least one RAE-oil (d) has a polyaromatic hydrocarbons (PAH) content not higher than or equal to 6 ppm.

25. A tire according to any one of claims 20 to 24, wherein said at least one RAE-oil (d) has an aromatic carbons (CA) content of from 35% to 38%, preferably of 36%.

26. A tire according to any one of claim 20 or 25, wherein said at least one RAE-oil (d) has a naphthene ring carbons (CN) content of from 27% to 30%, preferably of 29%.

27. A tire according to any one of claims 20 to 26, wherein said at least one RAE-oil (d) has a paraffin chain carbons (CP) content of from 33% to 38%, preferably of 35%.

28. A tire according to any one of the preceding claims, wherein said crosslinkable elastomeric composition further comprises at least one silane coupling agent (e).

29. A tire according to claim 28, wherein said at least one silane coupling agent (e) is selected from those having the following structural formula (I):
(R)₃Si-CₜH₂tX (I)
wherein the groups R, which may be equal or different from each other, are selected from: alkyl, alkoxy or aryloxy groups or from halogen atoms, on condition that at least one of the groups R is an alkoxy or aryloxy group; t is an integer of from 1 to 6 extremes included; X is a group selected from: nitroso, mercapto, amino, epoxide, vinyl, imide, chloro, -(S)ᵤCₜH₂ᵣSi-(R)₃ or or -S-COR in which u and t are integers of from 1 to 6 extremes included and the groups R are defined as reported above.

30. A tire according to any one of claim 28 or 29, wherein said at least one silane coupling agent (e) is present in the crosslinkable elastomeric composition in an amount of from 0 phr to 10 phr.

31. A tire according to claim 30, wherein said at least one coupling agent (e) is present in the crosslinkable elastomeric composition in an amount of from 0.4 phr to 8 phr.

32. A tire according to any one of the preceding claims, wherein said crosslinkable elastomeric composition further comprises at least one resin (f).

33. A tire according to claim 32, wherein said at least one resin (f) is selected from α-methyl-styrene resins, phenolic resins, cumarone indene resins, or mixtures thereof.

34. A tire according to any one of claim 32 or 33, wherein said at least one resin (f) is present in the crosslinkable elastomeric composition in an amount of from 0 phr to 15 phr.

35. A tire according to claim 34, wherein said at least one resin (f) is present in the crosslinkable elastomeric composition in an amount of from 7 phr to 12 phr.

36. A tire according to any one of the preceding claims, wherein said crosslinkable elastomeric composition comprises from 0 phr to 120 phr of at least one additional reinforcing filler.

37. A tire according to claim 36, wherein said crosslinkable elastomeric composition comprises from 20 phr to 90 phr of said at least one additional reinforcing filler.

38. A tread band including a crosslinkable elastomeric composition comprising:
(a) from 40 phr to 100 phr of at least one styrene/1,3-butadiene copolymer;
(b) from 0 phr to 60 phr of at least one diene elastomeric polymer (d) other than the styrene/1,3-butadiene copolymer;
(c) from 60 phr to 100 phr of at least one silica reinforcing filler;
(d) from 20 phr to 60 phr of at least one RAE-oil (Residual Aromatic Extract).

39. A tread band according to claim 38, wherein said crosslinkable elastomeric composition is in accordance with any one of claims 3 to 37.

40. A crosslinkable elastomeric composition comprising:
(a) from 40 phr to 100 phr of at least one, styrene/1,3-butadiene copolymer;
(b) from 0 phr to 60 phr of at least one diene elastomeric polymer (d) other than the styrene/1,3-butadiene copolymer;
(c) from 60 phr to 100 phr of at least one silica reinforcing filler;
(d) from 20 phr to 60 phr of at least one RAE-oil.

41. A crosslinkable elastomeric composition according to claim 40, wherein said crosslinkable elastomeric composition is in accordance with any one of claims 3 to 37.

42. A crosslinked manufactured article obtained by crosslinking a crosslinkable elastomeric composition according to claim 40 or 41.

## Patentansprüche

1. Ein Reifen umfassend mindestens ein Bauelement, das ein vernetztes elastomeres Material einschließt, das durch Vernetzen einer vernetzbaren Elsatomer-Zusammensetzung erhalten wird, die folgendes einschließt:
(a) 40 phr bis 100 phr von mindestens einem Styrol/1,3-Butadien-Copolymer;
(b) 0 phr bis 60 phr von mindestens einem Dienelastomerpolymer, das anders ist als das Styrol/1,3-Butadien-Copolymer;
(c) 60 phr bis 100 phr von mindestens einem Siliciumdioxid-Verstärkungsfüllstoff;
(d) 20 phr bis 60 phr von mindestens einem RAE-Öl.

2. Ein Reifen nach Anspruch 1 umfassend:
- einen Karkassenaufbau von einer im Wesentlichen ringförmigen Form mit gegenüberliegenden seitlichen Kanten, die mit den jeweiligen rechten und linken Wulstaufbauten verbunden sind,
wobei die Wulstaufbauten mindestens einen Wulstkern und mindestens einen Wulst-Füllstoff einschließen;
- einen Gürtelaufbau, der in einer radial externen Position bezüglich des Karkassenaufbaus angebracht ist;
- ein Laufflächenband, das über die Gürtelstruktur gelegt ist;
- ein Paar von Seitenwänden, die seitlich an gegenüberliegenden Seiten bezüglich des Karkassenaufbaus angebracht sind;
wobei das Bauelement ein Laufflächenband ist.

3. Ein Reifen nach Anspruch 1 oder 2, wobei die vernetzbare Elastomer-Zusammensetzung 50 phr bis 90 phr von mindestens einem Styrol/1,3-Butadien-Copolymer (a) einschließt.

4. Ein Reifen nach Anspruch 3, wobei die vernetzbare Elastomer-Zusammensetzung 60 phr bis 80 phr von mindestens einem Styrol/1,3-Butadien-Copolymer (a) einschließt.

5. Ein Reifen nach einem der vorhergehenden Ansprüche, wobei das mindestens eine Styrol/1,3-Butadien-Copolymer (a) einen Styrolgehalt von 10 % bis 50 % aufweist.

6. Ein Reifen nach Anspruch 5, wobei das mindestens eine Styrol/1,3-Butadien-Copolymer (a) einen Styrolgehalt von 20 % bis 40 % aufweist.

7. Ein Reifen nach Anspruch 6, wobei das mindestens eine Styrol/1,3-Butadien-Copolymer (a) einen Styrolgehalt von 25 % bis 35 % aufweist.

8. Ein Reifen nach einem der vorhergehenden Ansprüche, wobei die vernetzbare Elastomer-Zusammensetzung 10 phr bis 50 phr von mindestens einem Dienelastomerpolymer einschließt, das anders ist als das Styrol/1,3-Butadien-Copolymer (b).

9. Ein Reifen nach Anspruch 8, wobei die vernetzbare Elastomer-Zusammensetzung 20 phr bis 40 phr des mindestens einen Dienelastomerpolymers einschließt, das anders ist als das Styrol/1,3-Butadien-Copolymer (b).

10. Ein Reifen nach einem der vorhergehenden Ansprüche, wobei das mindestens eine Dienelastomerpolymer, das anders ist als das Styrol/1,3-Butadien-Copolymer (b) eine Glasübergangstemperatur (T_{g}) unter 20 °C aufweist.

11. Ein Reifen nach Anspruch 10, wobei das mindestens eine Dienelastomerpolymer, das anders ist als das Styrol/1,3-Butadien-Copolymer (b), ausgewählt ist aus: cis-1,4-Polyisopren (natürlich oder synthetisch), 3,4-Polyisopren, Polybutadien (insbesondere Polybutadien mit einem hohen 1,4-cis-Gehalt und einem niedrigen Vinylgehalt), gegebenenfalls halogenierten Isopren/Isobuten-Copolymeren, 1,3-Butadien/Acrylnitril-Copolymeren, Styrol/Isopren/1,3-Butadien-Copolymeren, Styrol/1,3-Butadien/Acrylnitril-Copolymeren oder Gemischen davon.

12. Ein Reifen nach Anspruch 11, wobei das mindestens eine Dienelastomerpolymer, das anders ist als das Styrol/1,3-Butadien-Copolymer (b) ein Polybutadien ist.

13. Ein Reifen nach Anspruch 12, wobei das Polybutadien einen 1,4-cis-Gehalt von mehr als 90 % und einen Vinylgehalt von weniger als 5 % aufweist.

14. Ein Reifen nach einem der vorhergehenden Ansprüche, wobei die vernetzbare Elastomer-Zusammensetzung 70 phr bis 90 phr von mindestens einem Siliciumdioxid-Verstärkungsfüllstoff (c) einschließt.

15. Ein Reifen nach Anspruch 14, wobei die vernetzbare Elastomer-Zusammensetzung 75 phr bis 85 phr des mindestens einen Siliciumdioxid-Verstärkungsfüllstoffs (c) einschließt.

16. Ein Reifen nach einem der vorhergehenden Ansprüche, wobei der mindestens eine Siliciumdioxid-Verstärkungsfüllstoff (c) ausgewählt ist aus amorphem Kieselhydrogel, nassem Siliciumdioxid (Kieselsäurehydrat), trockenem Siliciumdioxid (wasserfreie Kieselsäure), Quarzstaub, oder Gemischen davon.

17. Ein Reifen nach einem der vorhergehenden Ansprüche, wobei die vernetzbare Elastomer-Zusammensetzung 20 phr bis 60 phr von mindestens einem RAE-Öl (d) einschließt.

18. Ein Reifen nach Anspruch 17, wobei die vernetzbare Elastomer-Zusammensetzung 25 phr bis 50 phr des mindestens einen RAE-Öls (d) einschließt.

19. Ein Reifen nach Anspruch 18, wobei die vernetzbare Elastomer-Zusammensetzung 30 phr bis 40 phr des mindestens einen RAE-Öls (d) einschließt.

20. Ein Reifen nach einem der vorhergehenden Ansprüche, wobei das mindestens eine RAE-Öl (d) die folgende Kohlenstoff-Verteilung aufweist:
- einen aromatischen Kohlenstoff (CA)-Gehalt von 25 % bis 50 %.
- einen Naphthenringkohlenstoff (CN)-Gehalt von 20 % bis 40 %.
- einen Paraffinkettenkohlenstoff (CP)-Gehalt von 20 % bis 50 %.
- einen polyaromatischen Kohlenwasserstoff (PAH)-Gehalt von nicht höher als oder gleich 10 ppm.

21. Ein Reifen nach Anspruch 20, wobei das mindestens eine RAE-Öl (d) einen aromatischen Kohlenstoff (CA)-Gehalt von 32 % bis 40 % aufweist.

22. Ein Reifen nach einem der Ansprüche 20 oder 21, wobei das mindestens eine RAE-Öl (d) einen Naphthenringkohlenstoff (CN)-Gehalt von 25 % bis 33 % aufweist.

23. Ein Reifen nach einem der Ansprüche 20 bis 22, wobei das mindestens eine RAE-Öl (d) einen Paraffinkettenkohlenstoff (CP)-Gehalt von 30 % bis 40 % aufweist.

24. Ein Reifen nach einem der Ansprüche 20 bis 23, wobei das mindestens eine RAE-Öl (d) einen polyaromatischen Kohlenwasserstoff (PAH)-Gehalt von nicht höher als oder gleich 6 ppm aufweist.

25. Ein Reifen nach einem der Ansprüche 20 bis 24, wobei das mindestens eine RAE-Öl (d) einen aromatischen Kohlenstoff (CA)-Gehalt von 35 % bis 38 %, vorzugsweise von 36 % aufweist.

26. Ein Reifen nach einem der Ansprüche 20 oder 25, wobei das mindestens eine RAE-Öl (d) einen Naphthenringkohlenstoff (CN)-Gehalt von 27 % bis 30 %, vorzugsweise von 29 % aufweist.

27. Ein Reifen nach einem der Ansprüche 20 bis 26, wobei das mindestens eine RAE-Öl (d) einen Paraffinkettenkohlenstoff (CP)-Gehalt von 33 % bis 38 %, vorzugsweise von 35 % aufweist.

28. Ein Reifen nach einem der vorhergehenden Ansprüche, wobei die vernetzbare Elastomer-Zusammensetzung weiterhin mindestens ein Silan-Kupplungsmittel (e) einschließt.

29. Ein Reifen nach Anspruch 28, wobei das mindestens eine Silan-Kupplungsmittel (e) aus denjenigen mit der folgenden Strukturformel (I) ausgewählt ist:
(R)₃Si-CₜH₂ₜ-X (I)
wobei die Gruppen R, die gleich oder voneinander verschieden sein können, ausgewählt sind aus: Alkyl-, Alkoxy- oder Aryloxy-Gruppen oder aus Halogenatomen, mit der Maßgabe, dass mindestens eine der Gruppen R eine Alkoxy- oder Aryloxy-Gruppe ist; t eine ganze Zahl von 1 bis 6, Randwerte eingeschlossen, ist; X eine Gruppe ist, die ausgewählt ist aus: Nitroso, Mercapto, Amino, Epoxid, Vinyl, Imid, Chlor-, (S)ᵤCₜH₂t-Si-(R)₃ oder -S-COR, wobei u und t ganze Zahlen von 1 bis 6, Randwerte eingeschlossen, sind und die Gruppen R wie vorstehend angegeben definiert sind.

30. Ein Reifen nach einem der Ansprüche 28 oder 29, wobei das mindestens eine Silan-Kupplungsmittel (e) in der vernetzbaren Elastomer-Zusammensetzung in einer Menge von 0 phr bis 10 phr vorhanden ist.

31. Ein Reifen nach Anspruch 30, wobei das mindestens eine Kupplungsmittel (e) in der vernetzbaren Elastomer-Zusammensetzung in einer Menge von 0,4 phr bis 8 phr vorhanden ist.

32. Ein Reifen nach einem der vorhergehenden Ansprüche, wobei die vernetzbare Elastomer-Zusammensetzung weiterhin mindestens ein Harz (f) einschließt.

33. Ein Reifen nach Anspruch 32, wobei das mindestens eine Harz (f) ausgewählt ist aus α-Methylstyrolharzen, Phenolharzen, Cumaron-Indolharzen oder Gemischen davon.

34. Ein Reifen nach einem der Ansprüche 32 oder 33, wobei das mindestens eine Harz (f) in der vernetzbaren Elastomer-Zusammensetzung in einer Menge von 0 phr bis 15 phr vorhanden ist.

35. Ein Reifen nach Anspruch 34, wobei das mindestens eine Harz (f) in der vernetzbaren Elastomer-Zusammensetzung in einer Menge von 7 phr bis 12 phr vorhanden ist.

36. Ein Reifen nach einem der vorhergehenden Ansprüche, wobei die vernetzbare Elastomer-Zusammensetzung 0 phr bis 120 phr von mindestens einem zusätzlichen Verstärkungsfüllstoff einschließt.

37. Ein Reifen nach Anspruch 36, wobei die vernetzbare Elastomer-Zusammensetzung 20 phr bis 90 phr des mindestens einen zusätzlichen Verstärkungsfüllstoffs einschließt.

38. Ein Laufflächenband, das eine vernetzbare Elastomer-Zusammensetzung einschließt, umfassend:
(a) 40 phr bis 100 phr von mindestens einem Styrol/1,3-Butadien-Copolymer;
(b) 0 phr bis 60 phr von mindestens einem Dienelastomerpolymer (d), das anders ist als das Styrol/1,3-Butadien-Copolymer;
(c) 60 phr bis 100 phr von mindestens einem Siliciumdioxid-Verstärkungsfüllstoff;
(d) 20 phr bis 60 phr von mindestens einem RAE-Öl (Restaromaten-Extrakt).

39. Ein Laufflächenband nach Anspruch 38, wobei die vernetzbare Elastomer-Zusammensetzung gemäß einem der Ansprüche 3 bis 37 ist.

40. Eine vernetzbare Elastomer-Zusammensetzung umfassend:
(a) 40 phr bis 100 phr von mindestens einem Styrol/1,3-Butadien-Copolymer;
(b) 0 phr bis 60 phr von mindestens einem Dienelastomerpolymer (d), das anders ist als das Styrol/1,3-Butadien-Copolymer;
(c) 60 phr bis 100 phr von mindestens einem Siliciumdioxid-Verstärkungsfüllstoff;
(d) 20 phr bis 60 phr von mindestens einem RAE-Öl (Restaromaten-Extrakt).

41. Eine vernetzbare Elastomer-Zusammensetzung nach Anspruch 40, wobei die vernetzbare Elastomer-Zusammensetzung gemäß einem der Ansprüche 3 bis 37 ist.

42. Ein vernetztes Erzeugnis, das durch Vernetzen einer vernetzbaren Elastomer-Zusammensetzung nach Anspruch 40 oder 41 erhalten wird.

## Revendications

1. Pneumatique comprenant au moins un élément de structure qui contient un matériau élastomère réticulé obtenu par réticulation d'une composition élastomère réticulable comprenant:
(a) de 40 à 100 pcppe (parties pour cent parties de polymères élastomères) d'au moins un copolymère de styrène et de buta-1,3-diène;
(b) de 0 à 60 pcppe d'au moins un polymère élastomère de diène autre que ledit copolymère de styrène et de buta-1,3-diène;
(c) de 60 à 100 pcppe d'au moins une charge renforçante de type silice;
(d) de 20 à 60 pcppe d'au moins une huile RAE (extrait aromatique résiduel).

2. Pneumatique conforme à la revendication 1, qui comprend:
- une structure de carcasse de forme sensiblement toroïdale, dont les bords opposés sont respectivement associés à des structures de talon droit et de talon gauche, lesquelles structures de talon comprennent chacune au moins une tringle et au moins un bourrage;
- une structure de ceinture, placée en situation radialement externe par rapport à ladite structure de carcasse;
- une bande de roulement, placée par-dessus ladite structure de ceinture;
- et une paire de flancs, placés latéralement sur les bords opposés de ladite structure de carcasse;
et dans lequel ledit élément de structure est une bande de roulement.

3. Pneumatique conforme à la revendication 1 ou 2, pour lequel ladite composition élastomère réticulable comprend de 50 à 90 pcppe d'au moins un copolymère (a) de styrène et de buta-1,3-diène.

4. Pneumatique conforme à la revendication 3, pour lequel ladite composition élastomère réticulable comprend de 60 à 80 pcppe d'au moins un copolymère (a) de styrène et de buta-1,3-diène.

5. Pneumatique conforme à l'une des revendications précédentes, pour lequel ledit copolymère (a) de styrène et de buta-1,3-diène au nombre d'au moins un contient de 10 à 50 % de motifs dérivés du styrène.

6. Pneumatique conforme à la revendication 5, pour lequel ledit copolymère (a) de styrène et de buta-1,3-diène au nombre d'au moins un contient de 20 à 40 % de motifs dérivés du styrène.

7. Pneumatique conforme à la revendication 6, pour lequel ledit copolymère (a) de styrène et de buta-1,3-diène au nombre d'au moins un contient de 25 à 35 % de motifs dérivés du styrène.

8. Pneumatique conforme à l'une des revendications précédentes, pour lequel ladite composition élastomère réticulable comprend de 10 à 50 pcppe d'au moins un polymère (b) élastomère de diène autre que ledit copo-lymère de styrène et de buta-1,3-diène.

9. Pneumatique conforme à la revendication 8, pour lequel ladite composition élastomère réticulable comprend de 20 à 40 pcppe d'au moins un polymère (b) élastomère de diène autre que ledit copolymère de styrène et de buta-1,3-diène.

10. Pneumatique conforme à l'une des revendications précédentes, pour lequel ledit polymère (b) élastomère de diène autre que ledit copolymère de styrène et de buta-1,3-diène présente une température de transition vitreuse (Tg) inférieure à 20 °C.

11. Pneumatique conforme à la revendication 10, pour lequel ledit polymère (b) élastomère de diène autre que ledit copolymère de styrène et de buta-1,3-diène est choisi parmi les suivants : cis-1,4-polyisoprène (naturel ou synthétique), 3,4-polyisoprène, polybutadiène (en particulier, un polybutadiène à haute teneur en enchaînements 1,4-cis et à faible teneur en groupes vinyle), copolymères d'isoprène et d'isobutène, éventuellement halogénés, copolymères de buta-1,3-diène et d'acrylonitrile, copolymères de styrène, d'isoprène et de buta-1,3-diène, et copolymères de styrène, de buta-1,3-diène et d'acrylonitrile, ainsi que les mélanges de tels polymères.

12. Pneumatique conforme à la revendication 11, pour lequel ledit polymère (b) élastomère de diène autre que ledit copolymère de styrène et de buta-1,3-diène est un polybutadiène.

13. Pneumatique conforme à la revendication 12, pour lequel ledit polybutadiène comporte plus de 90 % d'enchaînements 1,4-cis et moins de 5 % de groupes vinyle.

14. Pneumatique conforme à l'une des revendications précédentes, pour lequel ladite composition élastomère réticulable comprend de 70 à 90 pcppe d'au moins une charge renforçante de type silice (c).

15. Pneumatique conforme à la revendication 14, pour lequel ladite composition élastomère réticulable comprend de 75 à 85 pcppe d'au moins une charge renforçante de type silice (c).

16. Pneumatique conforme à l'une des revendications précédentes, pour lequel ladite charge renforçante de type silice (c) au nombre d'au moins une est choisie parmi de la silice amorphe précipitée, de la silice humide (acide silicique hydraté), de la silice sèche (acide silicique anhy-dre) et de la silice de pyrohydrolyse, ainsi que les mélanges de silices de ces divers types.

17. Pneumatique conforme à l'une des revendications précédentes, pour lequel ladite composition élastomère réticulable comprend de 20 à 60 pcppe d'au moins une huile RAE (d).

18. Pneumatique conforme à la revendication 17, pour lequel ladite composition élastomère réticulable comprend de 25 à 50 pcppe d'au moins une huile RAE (d).

19. Pneumatique conforme à la revendication 18, pour lequel ladite composition élastomère réticulable comprend de 30 à 40 pcppe d'au moins une huile RAE (d).

20. Pneumatique conforme à l'une des revendications précédentes, pour lequel ladite huile RAE (d) au nombre d'au moins une présente la répartition en atomes de carbone suivante :
- de 25 à 50 % d'atomes de carbone de cycles aromatiques (CA) ;
- de 20 à 40 % d'atomes de carbone de cycles naphténiques (CN) ;
- de 20 à 50 % d'atomes de carbone de chaînes paraffiniques (CP) ;
et contient au plus 10 ppm d'hydrocarbures aromatiques polycycliques (HAPC).

21. Pneumatique conforme à la revendication 20, pour lequel ladite huile RAE (d) au nombre d'au moins une contient de 32 à 40 % d'atomes de carbone de cycles aromatiques (CA).

22. Pneumatique conforme à la revendication 20 ou 21, pour lequel ladite huile RAE (d) au nombre d'au moins une contient de 25 à 33 % d'atomes de carbone de cycles naphténiques (CN).

23. Pneumatique conforme à l'une des revendications 20 à 22, pour lequel ladite huile RAE (d) au nombre d'au moins une contient de 30 à 40 % d'atomes de carbone de chaînes paraffiniques (CP).

24. Pneumatique conforme à l'une des revendications 20 à 23, pour lequel ladite huile RAE (d) au nombre d'au moins une contient au plus 6 ppm d'hydrocarbures aromatiques polycycliques (HAPC).

25. Pneumatique conforme à l'une des revendications 20 à 24, pour lequel ladite huile RAE (d) au nombre d'au moins une contient de 35 à 38 %, et de préférence 36 %, d'atomes de carbone de cycles aromatiques (CA).

26. Pneumatique conforme à la revendication 20 ou 25, pour lequel ladite huile RAE (d) au nombre d'au moins une contient de 27 à 30 %, et de préférence 29 %, d'atomes de carbone de cycles naphténiques (CN).

27. Pneumatique conforme à l'une des revendications 20 à 26, pour lequel ladite huile RAE (d) au nombre d'au moins une contient de 33 à 38 %, et de préférence 35 %, d'atomes de carbone de chaînes paraffini-ques (CP).

28. Pneumatique conforme à l'une des revendications précédentes, pour lequel ladite composition élastomère réticulable comprend en outre au moins un agent de couplage de type silane (e).

29. Pneumatique conforme à la revendication 28, pour lequel ledit agent de couplage de type silane (e) au nombre d'au moins un est choisi parmi ceux qui présentent la formule structurale (I) suivante:
(R)₃Si-CₜH₂t-X (I)
dans laquelle:
- les entités symbolisées par R, qui peuvent être identiques ou différentes les unes des autres, sont choisies parmi les groupes alkyle, alcoxy ou aryloxy et les atomes d'halogène, sous réserve qu'au moins l'une de ces entités symbolisées par R soit un groupe alcoxy ou aryloxy;
- l'indice t est un nombre entier qui vaut de 1 à 6, bornes comprises ;
- et X représente une entité choisie parmi les groupes nitroso, sulfanyle, amino, vinyle, époxyde et imide, un atome de chlore et les groupes symbolisés par -(S)ᵤ-CtH₂t+Si(R)₃ ou -S-COR où les indices u et t sont des nombres entiers qui valent de 1 à 6, bornes comprises, et les entités symbolisées par R répondent à la définition donnée ci-dessus.

30. Pneumatique conforme à la revendication 28 ou 29, pour lequel ledit agent de couplage de type silane (e) au nombre d'au moins un se trouve présent, dans la composition élastomère réticulable, en une propor-tion de 0 à 10 pcppe.

31. Pneumatique conforme à la revendication 30, pour lequel ledit agent de couplage de type silane (e) au nombre d'au moins un se trouve présent, dans la composition élastomère réticulable, en une proportion de 0,4 à 8 pcppe.

32. Pneumatique conforme à l'une des revendications précédentes, pour lequel ladite composition élastomère réticulable comprend en outre au moins une résine (f).

33. Pneumatique conforme à la revendication 32, pour lequel ladite résine (f) au nombre d'au moins une est choisie parmi les résines d'alpha-méthyl-styrène, les résines phénoliques et les résines de coumarone-indène, ainsi que leurs mélanges.

34. Pneumatique conforme à la revendication 32 ou 33, pour lequel ladite résine (f) au nombre d'au moins une se trouve présente, dans la composition élastomère réticulable, en une proportion de 0 à 15 pcppe.

35. Pneumatique conforme à la revendication 34, pour lequel ladite résine (f) au nombre d'au moins une se trouve présente, dans la composition élastomère réticulable, en une proportion de 7 à 12 pcppe.

36. Pneumatique conforme à l'une des revendications précédentes, pour lequel ladite composition élastomère réticulable comprend de 0 à 120 pcppe d'au moins une charge renforçante supplémentaire.

37. Pneumatique conforme à la revendication 36, pour lequel ladite composition élastomère réticulable comprend de 20 à 90 pcppe d'au moins une charge renforçante supplémentaire.

38. Bande de roulement renfermant une composition élastomère réticulable comprenant:
(a) de 40 à 100 pcppe (parties pour cent parties de polymères élastomères) d'au moins un copolymère de styrène et de buta-1,3-diène;
(b) de 0 à 60 pcppe d'au moins un polymère élastomère de diène autre que ledit copolymère de styrène et de buta-1,3-diène;
(c) de 60 à 100 pcppe d'au moins une charge renforçante de type silice;
(d) et de 20 à 60 pcppe d'au moins une huile RAE (extrait aromatique résiduel).

39. Bande de roulement conforme à la revendication 38, dans laquelle ladite composition élastomère réticulable présente les caractéristiques indiquées dans l'une des revendications 3 à 37.

40. Composition élastomère réticulable comprenant:
(a) de 40 à 100 pcppe (parties pour cent parties de polymères élastomères) d'au moins un copolymère de styrène et de buta-1,3-diène;
(b) de 0 à 60 pcppe d'au moins un polymère élastomère de diène autre que ledit copolymère de styrène et de buta-1,3-diène;
(c) de 60 à 100 pcppe d'au moins une charge renforçante de type silice;
(d) et de 20 à 60 pcppe d'au moins une huile RAE (extrait aromatique résiduel).

41. Composition élastomère réticulable conforme à la revendica-tion 40, laquelle composition élastomère réticulable présente les caractéristiques indiquées dans l'une des revendications 3 à 37.

42. Article manufacturé réticulé, obtenu par réticulation d'une composition élastomère réticulable conforme à la revendication 40 ou 41.
